Europäisches Patentamt

European Patent Office

Office européen des brevets

(19)

(11) Numéro de publication : **0 321 334 B1**

(12) **FASCICULE DE BREVET EUROPEEN**

(45) Date de publication du fascicule du brevet :
06.11.91 Bulletin 91/45

(51) Int. Cl.⁵ : **G21C 19/34**

(21) Numéro de dépôt : **88403165.9**

(22) Date de dépôt : **13.12.88**

(54) **Appareil et procédé de séparation d'embout d'assemblage combustible nucléaire.**

(30) Priorité : **15.12.87 FR 8717484**

(43) Date de publication de la demande :
**21.06.89 Bulletin 89/25**

(45) Mention de la délivrance du brevet :
**06.11.91 Bulletin 91/45**

(84) Etats contractants désignés :
**BE CH DE ES GB LI SE**

(56) Documents cités :
**EP-A- 0 145 185**
**EP-A- 0 164 510**
**EP-A- 0 175 974**
**EP-A- 0 189 797**
**EP-A- 0 268 327**

(73) Titulaire : **FRAMATOME**
**Tour Fiat 1, Place de la Coupole**
**F-92400 Courbevoie (FR)**

(72) Inventeur : **Beneck, Jean Albert**
**5 Rue du Coteaux**
**F-94490 Ormesson (FR)**
Inventeur : **Quayre, Claude**
**50 Avenue Aristide Briand**
**F-93360 Neuilly Plaisance (FR)**
Inventeur : **Moreau, Jean Roger Marcel**
**19 Rue San Filiu de Guiscols**
**F-26300 Bourg de Peage (FR)**
Inventeur : **Vermeille, Daniel Eugène Alfred**
**Rue André Philippe Quartier des Ors**
**F-26100 Romans (FR)**

(74) Mandataire : **Fort, Jacques et al**
**CABINET PLASSERAUD 84, rue d'Amsterdam**
**F-75009 Paris (FR)**

EP 0 321 334 B1

## Description

L'invention a pour objet un appareil et un procédé de séparation d'un embout, généralement d'un embout supérieur, d'assemblage combustible nucléaire, cet embout ayant une plaque adaptatrice percée de passages de réception de tubes guides fixés à la plaque adaptatrice et à un autre embout pour constituer un squelette.

Les assemblages combustibles actuels pour réacteur nucléaire à eau sous pression comportent un tel squelette, complété par des grilles destinées à maintenir des crayons contenant des pastilles de combustible nucléaire parallèlement les uns aux autres et aux noeuds d'un réseau régulier, généralement carré. Dans la plupart des assemblages, les crayons n'occupent pas toute la longueur de l'espace limité par les embouts et, en particulier, n'ont qu'une faible saillie au-dessus de la grille supérieure.

Les assemblages combustibles, épuisés après un ou plusieurs cycles en réacteur, sont extraits de la cuve du réacteur et mis dans des râteliers de stockage placés au fond d'une piscine de désactivation. Pour réduire le volume nécessaire au stockage de longue durée des crayons de combustible, on a déjà proposé de démanteler les assemblages, d'en extraire les crayons et de rassembler ces derniers en bottes de crayons jointifs. Le démantèlement d'un assemblage implique d'enlever un embout, donc de découper les tubes guides (et éventuellement le tube central d'appareillage) qui le relient à l'autre embout.

On connaît déjà EP-A-145185 et EP-A-175974 des appareils permettant de découper successivement ou simultanément les tubes guides. La plupart de ces appareils sont construits pour couper les tubes guides par l'intérieur, pour que l'opération ne soit pas gênée par le faisceau de crayons de l'assemblage. Etant donné que tout endommagement d'un crayon provoquerait une contamination, ces appareils sont conçus de façon à ne pas entamer la gaine des crayons adjacents au tube à couper. Cette condition est facile à remplir lorsqu'on coupe les tubes guides immédiatement au-dessous de l'embout. Il n'en est plus de même lorsque l'on veut trancher le tube au-dessous de l'extrémité des crayons, de façon à faciliter la prise ultérieure de ces derniers à l'aide d'une pince de préhension.

L'invention vise notamment à fournir un appareil de séparation d'embout d'assemblage répondant mieux que ceux antérieurement connus aux exigences de la pratique, notamment en ce qu'il permet de sectionner simultanément l'ensemble des tubes guides (et éventuellement le tube d'instrumentation) de l'assemblage de façon précise, avec un faible volume de débris et en permettant l'enlèvement de l'embout détaché, sans intervention d'un outil supplémentaire.

Dans ce but, l'invention propose un appareil de séparation d'embout d'assemblage combustible nucléaire, l'embout à séparer ayant une plaque adaptatrice percée de passages de réception de tubes guides fixés à la plaque et à un autre embout, l'appareil comprenant plusieurs outils de coupe insérables dans les tubes guides et un bâti muni, d'une part, de moyens de fixation amovible et de centrage sur l'embout à séparer et, d'autre part, de moyens de guidage et de maintien des outils dans une répartition fixe et déterminée, correspondant à celle des tubes guides,

caractérisé en ce que lesdits outils comportent chacun une broche creuse dont la partie terminale est fractionnée par des fentes longitudinales en doigts expansibles portant un taillant de coupe et une tige déplaçable axialement le long de la broche et coopérant avec elle pour déployer radialement les doigts et les rétracter, en ce que les broches sont montées rotatives sur un plateau déplaçable verticalement par rapport au bâti par des premiers moyens moteurs et portant un moteur d'entraînement simultané en rotation de l'ensemble des broches, et en ce que les tiges sont portées par un ensemble d'expansion déplaçable verticalement par rapport au plateau par des seconds moyens moteurs.

Chacune des tiges comporte avantageusement un embout terminal qui provoque la rétraction radiale forcée des doigts lorsque les tiges sont amenées dans une position haute par rapport à la broche et un cône de déploiement forcé des doigts lors de l'abaissement de la tige par rapport à la broche à partir de ladite position haute. Le bâti comporte avantageusement, en plus des moyens de fixation sur l'embout, des leviers éjecteurs destinés à prendre appui sur l'embout détaché et à le chasser des moyens de centrage vers le bas.

L'invention propose également un procédé de séparation d'embout d'un assemblage du genre ci-dessus défini, caractérisé en ce que :

— on fixe temporairement un châssis sur l'embout à séparer, en alignement avec ce dernier,

— on déplace simultanément, par rapport au châssis, les broches d'un jeu de broches dans un sens provoquant l'insertion des broches dans les tubes guides sur une profondeur telle qu'une partie terminale des broches, expansible et munie d'éléments de coupe, soit face à l'emplacement de séparation,

— on entraîne en rotation simultanément l'ensemble des tiges,

— et on provoque l'extension progressive des parties terminales par insertion simultanée, dans l'ensemble des broches, de tiges.

L'invention sera mieux comprise à la lecture de la description qui suit d'un mode particulier de réalisation de l'invention et de variantes, donnés à titre d'exemples non limitatifs. L'invention se réfère aux dessins qui l'accompagnent, dans lesquels :

— la Figure 1 montre schématiquement, en élévation et en coupe partielle, la partie haute d'un assemblage combustible nucléaire ;

— la Figure 2 est un schéma montrant la constitution générale d'un appareil suivant l'invention, en élévation ;

— la Figure 3 est une vue, en élévation et en coupe partielle, du montage d'un des outils de coupe de l'appareil de la Figure 2 ;

— la Figure 4 est une vue de détail montrant, à grande échelle, l'outil de coupe de la Figure 3 et sa liaison avec le moteur d'entraînement en rotation ;

— la Figure 5 est une vue de détail à grande échelle, montrant la partie terminale de l'outil de coupe de la Figure 4 ;

— la Figure 6 est une coupe suivant la ligne VI-VI de la Figure 5 ;

— la Figure 7, similaire à la Figure 5, montre une variante de réalisation ;

— les Figures 8 et 9, similaires à la Figure 6, montrent une variante de réalisation de la broche de l'appareil, respectivement en position rétractée et déployée.

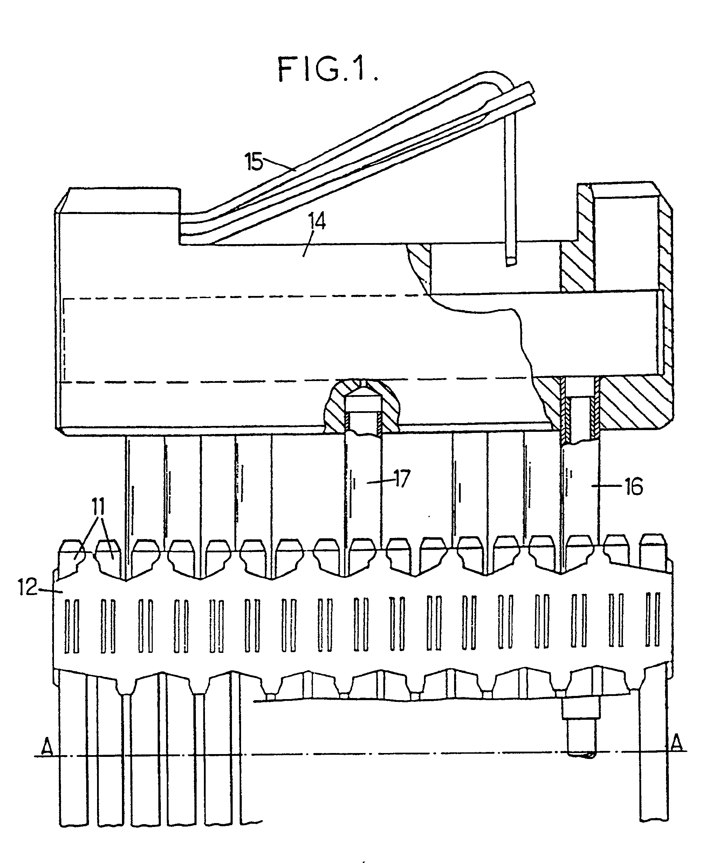

L'appareil qui sera décrit à titre d'exemple est destiné à couper les tubes guides et le tube central d'instrumentation d'un assemblage combustible du genre montré en Figure 1, juste au-dessous de la grille haute 12 c'est-à-dire au niveau indiqué par la ligne AA. L'assemblage comporte un embout supérieur 14 muni de ressorts anti-envol 15 et relié à l'embout inférieur (non représenté) par des tubes guides 16 et un tube central d'instrumentation 17. Les embouts, les tubes 16-17 et des grilles réparties le long des tubes guides constituent le squelette de l'assemblage, qui maintient les crayons de combustible 11. Les assemblages couramment utilisés à l'heure actuelle comportent vingt-cinq tubes guides 16 qu'il est souhaitable de couper à 2 cm environ sous la grille haute 12, seule représentée sur la Figure 1, pour que la partie terminale haute des crayons 11 soit bien dégagée une fois l'embout supérieur enlevé.

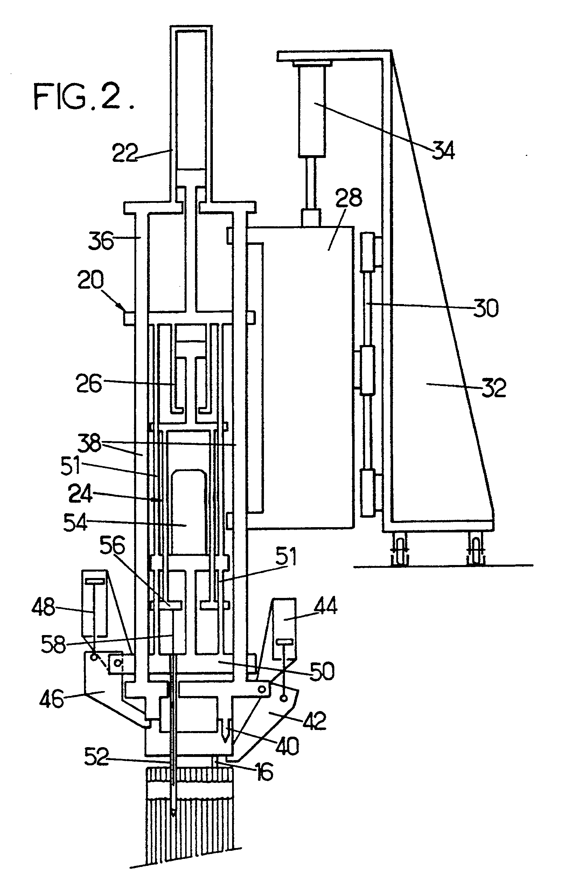

L'appareil de séparation d'embout montré schématiquement en Figure 2 peut être regardé comme comprenant un bâti, un ensemble de coupe 20 déplaçable verticalement par rapport au bâti par des premiers moyens moteurs, généralement constitués par un vérin hydraulique 22, et un ensemble d'expansion 24, déplaçable verticalement par rapport à l'ensemble de coupe par des seconds moyens moteurs tels qu'un vérin hydraulique 26.

Le bâti montré sur la Figure 2 comporte un support 28 monté sur des glissières verticales 30 d'un chariot 32 de déplacement horizontal. Un vérin 34 permet de régler la hauteur du support 28. Sur le support est fixé un châssis 36 portant le cylindre du vérin 22 et comportant des colonnes verticales 38 de guidage de l'ensemble de coupe 20. Un plateau inférieur du châssis 36 est muni de pions de centrage 40 destinés à s'engager dans des trous correspondants de l'embout supérieur et de crochets 42, au nombre de quatre par exemple, actionnables par des vérins 44, pour plaquer le plateau du châssis 36 contre l'embout. Des leviers éjecteurs 46, commandés par des vérins 48, permettent de chasser l'embout vers le bas pour le séparer de l'appareil, comme on le verra plus loin.

L'ensemble de coupe 20 est suspendu au piston du vérin 22. Il comporte une table 50 reliée au plateau par des colonnes 51, dans laquelle sont montées des broches rotatives 52 (dont une seule est montrée sur la Figure 2) faisant saillie vers le bas, à travers des trous de guidage ménagés dans le plateau du châssis 36. Un moteur électrique commun 54 est couplé aux broches par des moyens permettant de les entraîner simultanément en rotation. La répartition des broches correspond à celle des tubes guides et éventuellement du tube d'instrumentation de l'assemblage dont l'embout est à détacher. L'ensemble de coupe 20 coulisse, lors de ses mouvements de montée et de descente commandés par le vérin 22, sur les colonnes 38.

Comme on le verra plus loin, la partie inférieure des broches est expansible de façon à pouvoir prendre une position rétractée, dans laquelle des éléments de coupe qu'elle porte sont hors de contact avec la paroi du tube guide correspondant (ce qui permet d'insérer les broches dans les tubes et de les en retirer) et une position déployée où les éléments de coupe attaquent la paroi des tubes guides.

L'ensemble d'expansion 24, qui permet de déployer et de rétracter la partie inférieure de toutes les broches à la fois, est suspendu au piston du vérin 26. Cet ensemble coulisse sur des colonnes verticales appartenant à l'ensemble de coupe 20. A une plaque inférieure 56 de l'ensemble de coupe sont suspendues des tiges 58 en nombre égal à celui des broches, présentant la même disposition que les broches et dont la partie terminale constitue un poussoir d'expansion et de repliement forcé de la partie inférieure des broches.

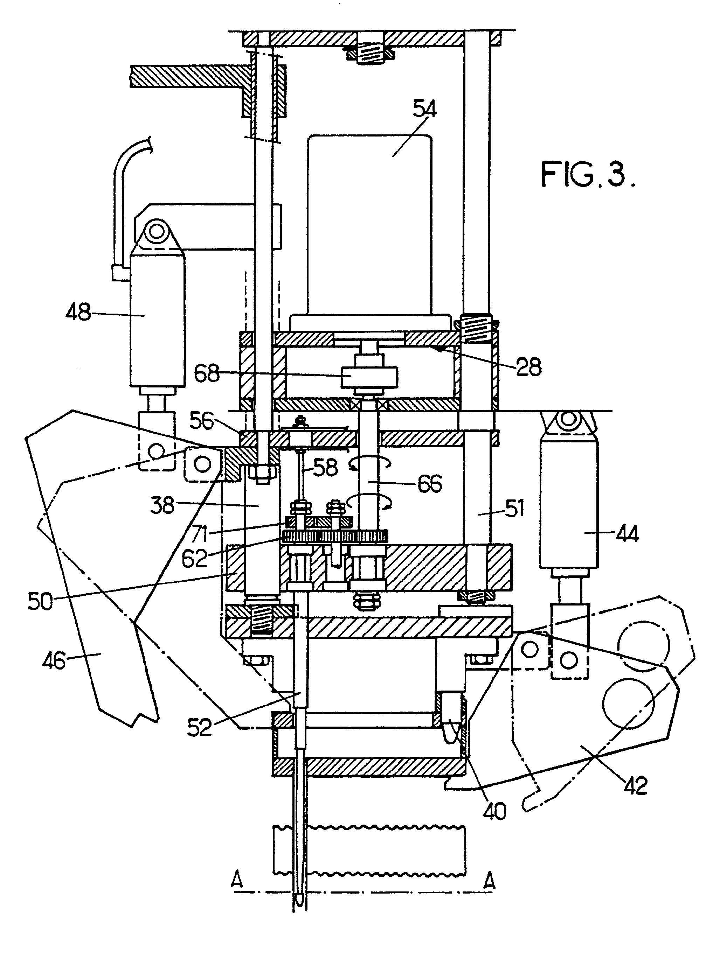

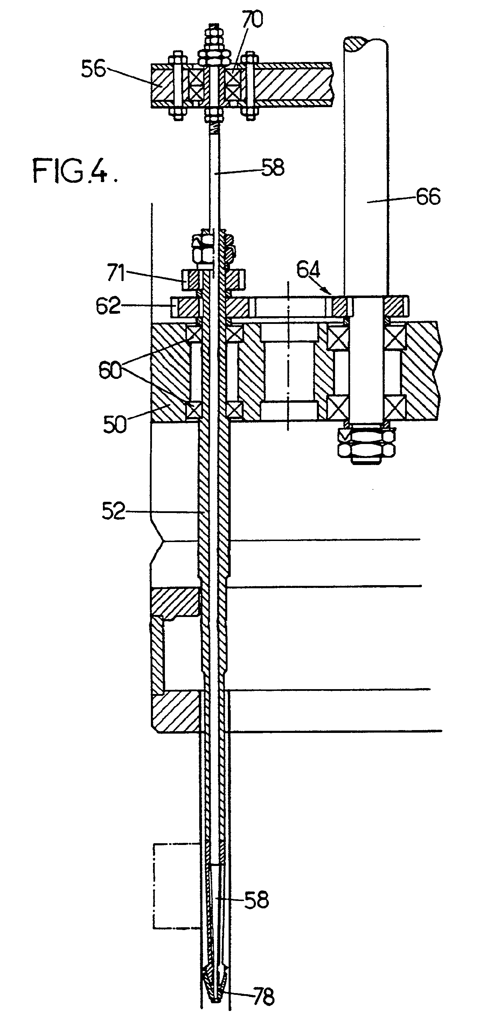

Les Figures 3 et 4 montrent une constitution possible des broches 52 et des éléments qui leur sont associés. Chaque broche 52 tourne dans des roulements 60 montés dans la table 50 et porte un pignon 62 couplé, par un train d'engrenages 64, à l'arbre central 66 relié à l'arbre du moteur 54 par un accouplement 68. Le moteur fournit ainsi la puissance de coupe nécessaire à toutes les broches 52 à la fois. Certaines des broches reçoivent cette puissance, non pas directement du moteur, mais par l'intermédiaire d'une autre broche, grâce à des engrenages supplémentaires tels que celui montré en 71 sur la Figure 4. Les tiges 58 d'expansion des broches sont retenues axialement dans la plaque 56 par des roulements à billes 70 (Figure 4).

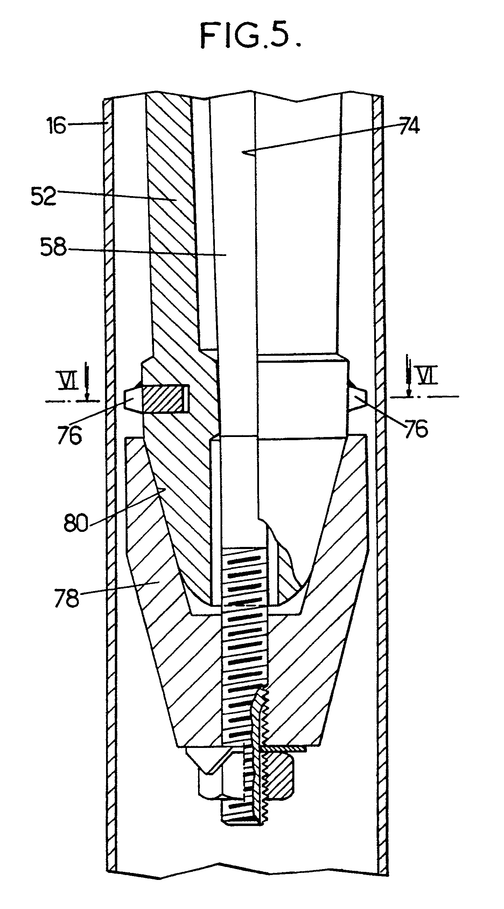

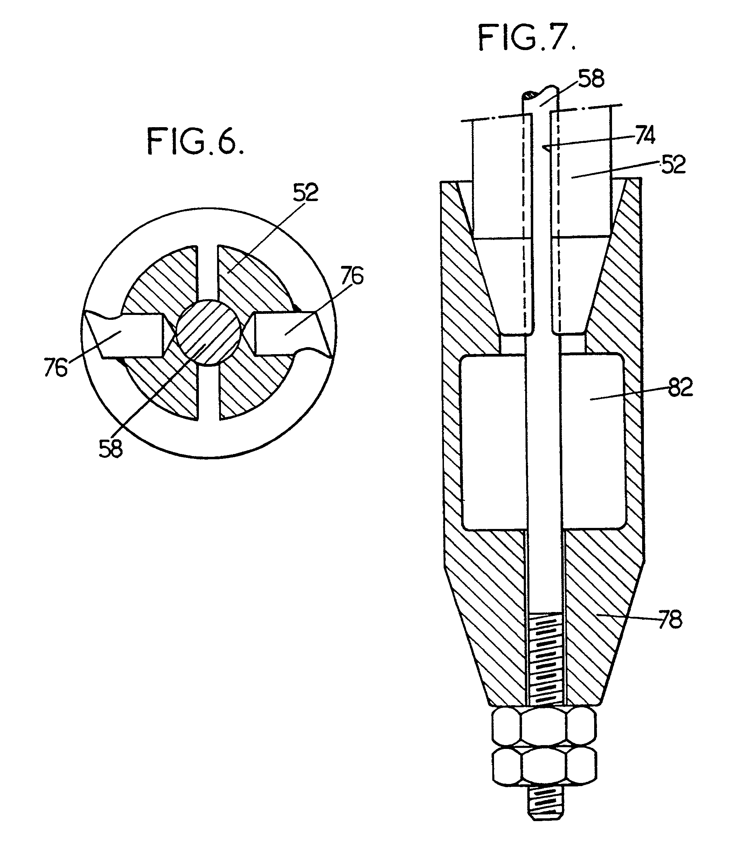

Les parties inférieures de toutes les broches sont identiques et peuvent avoir la constitution montrée en Figures 5 à 7. Une fente diamétrale 74 dans cette partie inférieure (Figure 6) sépare deux bras de pince qui portent chacun un élément de coupe constitué par un grain 76. Le passage intérieur de la broche présente, au droit des grains de coupe 76, une section rétrécie.

Lorsque le piston du vérin 26 est en position haute, les tiges 58 occupent la position représentée en Figure 5. Chaque tige 58 présente une partie tronconique s'évasant vers le haut qui, dans cette position, laissent les doigts de la pince se rétracter radialement jusqu'à une position où l'encombrement radial des grains 76 est inférieur à la section droite du tube guide à découper. A l'extrémité de la tige 58 est fixé, par exemple par une liaison filetée et un écrou, un embout conique 78 dont la paroi interne vient s'appliquer contre un cône terminal 80 de la broche 52. Lorsque le piston du vérin 26 est en position haute, cet embout conique provoque la rétraction radiale forcée des doigts de la pince (Figure 5). Inversement, lorsque le piston du vérin est en position basse, l'embout est dégagé de la pince et les doigts sont déployés par la partie tronconique de la tige.

Le fonctionnement du dispositif qui vient d'être décrit est le suivant.

L'appareil est amené au-dessus d'un assemblage à traiter à l'aide du chariot 32. Le châssis 36 est descendu sur l'assemblage à l'aide du chariot vertical 28 glissant sur les guides 30 liés au chariot 32, entraîné par le vérin 34, pour engager les pions de centrage 40 dans l'embout supérieur. Les vérins 44 sont actionnés pour verrouiller l'embout contre le plateau du châssis 36. Les éjecteurs sont dans la position montrée en Figure 2. Les pistons des vérins 22 et 26 sont en position haute.

Le vérin 22 est alors actionné pour descendre l'ensemble de coupe 20. Toutes les broches 52, dont la pince inférieure est rétractée, pénètrent dans les tubes guides pour amener les grains de coupe 76 au niveau requis, qui correspond avantageusement à la fin de course basse du piston de vérin.

Le moteur 54 est alors alimenté et entraîne simultanément toutes les broches 52, puis le vérin 26 est alimenté. L'ensemble d'expansion 24 descend, sur une course qui peut par exemple être de 50 mm. Les embouts coniques 78 libèrent les pinces terminales et les parties coniques des tiges 58 refoulent progressivement les bras de pince vers l'extérieur, pour avancer radialement les grains 76 et couper les tubes guides. La précision de déplacement que permet d'obtenir un poussoir conique garantit que les grains de coupe 76 ne prennent pas une saillie hors des tubes guides pour endommager les crayons adjacents.

Une fois la coupe effectuée, les tiges 58 sont remontées par commande du vérin 26 dans le sens de la remontée du piston. Le poussoir conique de chaque tige libère la pince correspondante, dont la rétraction forcée est provoquée par l'embout conique 78.

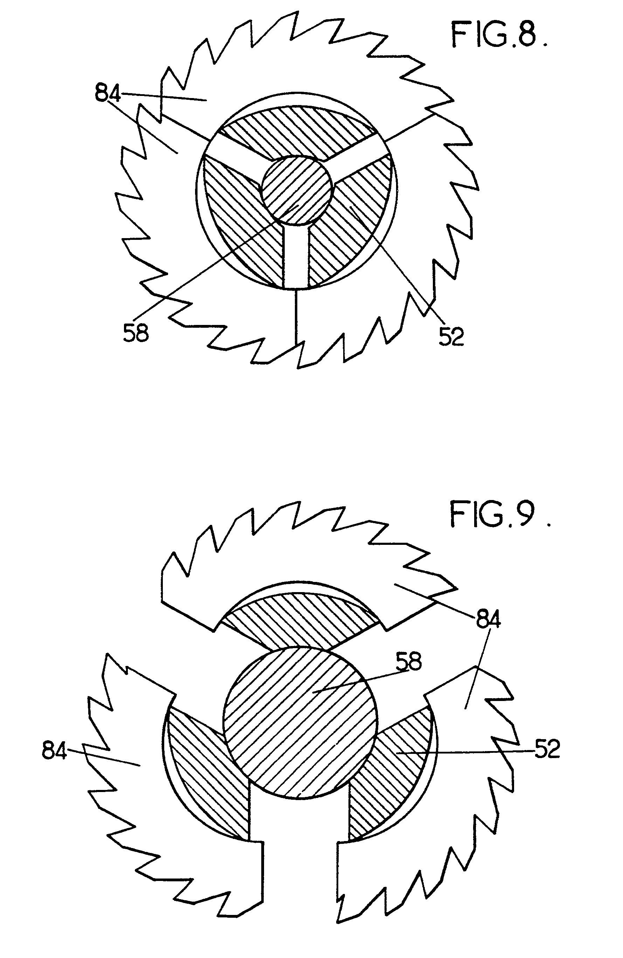

Dans la variante de réalisation montrée en Figure 7, où les éléments correspondant à ceux de la Figure 5 sont désignés par le même numéro de référence, une chambre 82 de réception des copeaux provenant de la découpe est ménagée dans chaque embout conique 78.

Les éléments de coupe ne sont pas nécessairement des grains du genre montré en Figures 5 et 6. Les Figures 8 et 9 montrent par exemple une variante de réalisation dans laquelle la partie terminale inférieure de la broche 52 est séparée par des fentes en trois doigts ayant chacun un développement angulaire de 120°, portant chacun un secteur denté 84. La Figure 8 montre les secteurs en position rétractée, en contact les uns avec les autres. La Figure 9 montre l'expansion forcée des secteurs par le poussoir conique de la tige 58 pour provoquer la découpe du tube guide.

## Revendications

1. Appareil de séparation d'embout d'assemblage combustible nucléaire, l'embout (14) à séparer ayant une plaque adaptatrice percée de passages de réception de tubes guides fixés à la plaque et à un autre embout, l'appareil comprenant plusieurs outils de coupe (52) insérables dans les tubes guides et un bâti (28, 36) muni de moyens (40, 42) de fixation amovible et de centrage sur l'embout (14) à séparer et muni de moyens de guidage et de maintien des outils dans une répartition fixe et déterminée, correspondant à celle des tubes guides,
caractérisé en ce que lesdits outils comportent chacun une broche creuse (52) dont la partie terminale est fractionnée par des fentes longitudinales (74) en doigts expansibles portant un taillant de coupe (76) et une tige (58) déplaçable axialement le long de la broche et coopérant avec elle pour déployer radialement les doigts et les rétracter,
en ce que les broches (52) sont montées rotatives sur un plateau déplaçable verticalement par rapport au bâti par des premiers moyens moteurs (22) et portant un moteur (54) d'entraînement simultané en rotation de l'ensemble des broches, et en ce que les tiges (58) sont portées par un ensemble d'expansion (24) déplaçable verticalement par rapport au plateau par des seconds moyens moteurs (26).

2. Appareil selon la revendication 1, caractérisé en ce que chaque tige (58) comporte un embout terminal conique (78) destiné à provoquer la rétraction radiale forcée des doigts lorsque les tiges sont amenées dans une position haute par rapport à la broche et un cone de déploiement forcé des doigts lors de l'abaissement de la tige par rapport à la broche à partir de ladite position haute.

3. Appareil selon la revendication 1 ou 2, caractérisé en ce que le bâti comporte des leviers éjecteurs (46) prévus pour prendre appui sur l'embout détaché et le chasser des moyens de centrage vers le bas.

4. Appareil selon la revendication 1, 2 ou 3, caractérisé en ce que ladite table appartient à un ensemble de coupe (20) muni de moyens de guidage coulissants sur le bâti et en ce que le moteur (54) est couplé par des trains d'engrenages à l'ensemble des broches, ledit ensemble étant suspendu au piston d'un vérin constituant les premiers moyens moteurs (22).

5. Appareil selon la revendication 4, caractérisé en ce que ledit ensemble d'expansion est muni de moyens de guidage sur l'ensemble de coupe et est suspendu au piston d'un vérin constituant les seconds moyens moteurs (26) dont le cylindre appartient à l'ensemble de coupe.

6. Appareil selon la revendication 5, caractérisé en ce que l'ensemble d'expansion comporte une plaque (56) dont toutes les tiges (58) sont solidarisées dans le sens axial par des roulements.

7. Appareil selon l'une quelconque des revendications 1 à 6, caractérisé en ce que chaque partie terminale de broche (52) est fractionnée en deux doigts portant chacun un grain de coupe.

8. Appareil selon l'une quelconque des revendications 1 à 6, caractérisé en ce que chaque partie terminale de broche est fractionnée par des fentes en plusieurs doigts portant chacun un secteur denté de coupe (84).

9. Procédé de séparation d'embout d'assemblage combustible nucléaire, l'embout (14) à séparer ayant une plaque adaptatrice percée de passages de réception de tubes guides fixés à la plaque et à un autre embout, caractérisé en ce que :

— on fixe temporairement un châssis sur l'embout (14) à séparer, en alignement avec ce dernier,

— on déplace simultanément, par rapport au châssis, les broches (52) d'un jeu de broches dans un sens provoquant l'insertion des broches dans les tubes guides sur une profondeur telle qu'une partie terminale des broches, expansible et munie d'éléments de coupe, soit face à l'emplacement de séparation,

— on entraîne en rotation simultanément l'ensemble des tiges,

— et on provoque l'extension progressive des parties terminales par insertion simultanée, dans l'ensemble des broches, de tiges (58).

## Patentansprüche

1. Gerät zum Abtrennen von Kernbrennelementendstücken wobei das abzutrennende Endstück (14) eine Anpassungsplatte aufweist, die mit Aufnahmekanälen von Führungsrohren durchsetzt ist, die an der Platte befestigt sind, und ein anderes Endstück aufweist, wobei das Gerät mehere Schneidewerkzeuge (52) aufweist, die in die Führungsrohre einführbar sind, und ein Gestell (28, 36) vorgesehen ist, das mit Einrichtungen (40, 42) zum entfernbaren Befestigen und Zentrieren auf dem zu trennenden Enstück (14) versehen ist, und mit Führungs- und Halteeinrichtungen der Werkzeuge in einer festen und vorbestimmten Verteilung versehen ist, die jener der Führungsrohre entspricht, **dadurch gekennzeichnet,**

daß die Werkzeuge jeweils eine hohle Klammer (52) aufweisen, deren Endbereich mit Längskerben (74) in ausdehnbare Finger unterteilt ist, die eine Schneide (76) tragen und eine Stange (58), die axial entlang der Klammer bewegbar ist und mit ihr zusammenwirkt, um radial die Finger auszubreiten und sie zusammenzuziehen,

daß die Klammern (52) drehbar auf einer Platte angeordnet sind, die bezüglich des Rahmens durch erste Motoreinrichtungen (22) vertikal bewegbar sind, und einen Antriebsmotor (54) tragen, der simultan zur Drehung der Klammeranordnung angetrieben wird,

und daß die Stangen (58) durch eine Ausbreitanordnung (24) getragen werden, die vertikal bezüglich der Platte durch zweite Motoreinrichtungen (26) bewegbar ist.

2. Gerät nach Anspruch 1, **dadurch gekennzeichnet,** daß jede Stange (58) ein konisches Endstück (78) aufweist, das dazu bestimmt ist, das radiale Zurückziehen unter Kraft der Finger hervorzurufen, wenn die Stangen in eine hohe Stellung bezüglich der Klammr gebracht sind und ein Ausbreitkonus von den Fingern beaufschlagt wird während des Absenkens der Stange bezüglich der Klammer, ausgehend von der hohen Stellung.

3. Gerät nach Anspruch 1 oder 2, **dadurch gekennzeichnet,** daß das Gestell Auswurfhebel (46) aufweist, die vorgesehen sind, um in Andruck auf das abgetrennte Endstück zu kommen und es mittels Zentrierungseinrichtungen nach unten auszuwerfen.

4. Gerät nach Anspruch 1, 2 oder 3, **dadurch gekennzeichnet,** daß der Tisch eine Schneideeinheit (20) aufweist, die mit Führungseinrichtungen versehen ist, die auf dem Gestell gleiten und daß der Motor (54) mit Getriebezügen mit der Klammeranordnung gekoppelt ist, wobei die Anordnung am Kolben eines Stelltriebs angehängt ist, der die ersten Motoreinrichtungen (22) bildet.

5. Gerät nach Anspruch 4, **dadurch gekennzeichnet,** daß die Expansionsanordnung mit Führungseinrichtungen auf der Schneideanordnung versehen ist und an den Kolben eines Stelltriebs angehängt ist, der die zweiten Motoreinrichtungen (26) bildet, dessen Zylinder der Schneideanordnung gehört.

6. Gerät nach Anspruch 5, **dadurch gekennzeichnet,** daß die Expansionsanordnung eine Platte (56) aufweist, von der alle Stangen (58) in axialer Richtung durch Wälzlager verbunden sind.

7. Gerät nach einem der Ansprüche 1 bis 6, **dadurch gekennzeichnet,** daß jeder Klammerendbereich (52) in zwei Finger unterteilt ist, die jeweils ein Schneidkorn tragen.

8. Gerät nach einem der Ansprüche 1 bis 6, **dadurch gekennzeichnet,** daß jeder Klammerendbereich durch Kerben in mehrere Finger unterteilt ist, die jeweils einen gezahnten Schneidebereich (84) aufweisen.

9. Verfahren zum Trennen von Kernbrennelementendstücken wobei das zu trennende Endstück (14) eine Anpassungsplatte aufweist, die mit Aufnahmekanälen von Führungsrohren versehen ist, die an der Platte befestigt sind und an einem anderen Endstück befestigt sind, **dadurch gekennzeichnet,** daß

zeitweise ein Chassis auf dem abzutrennenden Enstück (14) in Ausrichtung mit diesem letzteren befestigt wird,

gleichzeitig bezüglich des Chassis die Klammern (52) eines Klammersatzes in eine Richtung bewegt werden, die das Einführen der Klammern in die Führungsrohre auf einer Tiefe hervorrufen, derart, daß ein Endbereich der Klammern, der ausdehnbar und mit Schneideelementen versehen ist, sich gegenüber dem Trennort befindet,

gleichzeitig die Anordnung der Stangen in Drehung versetzt wird, und

die zunehmende Ausdehnung der Endbereiche durch gleichzeitiges Einführen in die Klammeranordnung von Stangen (58) hervorgerufen wird.

## Claims

1. Apparatus for separating a nuclear fuel assembly end piece, the end piece (14) to be separated having an adap-tor plate pierced with passages receiving guide tubes fixed to the plate and to another end piece, said appar-atus comprising a plurality of cutting tools (52) which can be inserted into the guide tubes and a frame (28, 36) provided with means (40, 42) for detachable fastening and centring on the end piece (14) to be separated, and provided with means for guiding and holding the tools in a fixed determined distribution corresponding to that of the guide tubes,

characterised in that each of said tools comprises a hollow spindle (52) whose end portion is divided by longitudinal slots (74) into expansible fingers carrying a cutting edge (76) and a rod (58) axially movable along the spindle and cooperating with the latter for radially opening out and retracting the fingers,

in that the spindles (52) are mounted for rotation on a plate which can be moved vertically relative to the frame by first drive means (22) and carries a motor (54) simultaneously driving all the spindles rotationally,

and in that the rods (58) are carried by an expansion assembly (24) which can be moved vertically relative to the plate by second drive means (26).

2. Apparatus according to Claim 1, characterised in that each rod (58) comprises a conical end piece (78) intended to effect the forced radial retraction of the fingers when the rods are brought into a high position relative to the spindle, and a cone for the forced opening out of the fingers when the rod is lowered relative to the spindle from said high position.

3. Apparatus according to Claim 1 or 2, characterised in that the frame comprises ejector levers (46) posi-tioned to bear against the detached end piece and to drive it downwards out of the centring means.

4. Apparatus according to Claim 1, 2 or 3, character-ized in that said table forms part of a cutting assembly (20) provided with guide means sliding on the frame, and in that the motor (54) is coupled by gear trains to all the spindles, said assembly being suspended on the piston of a jack constituting the first drive means (22).

5. Apparatus according to Claim 4, characterised in that said expansion assembly is provided with means of guidance on the cutting assembly and is suspended on the piston of a jack constituting the second drive means (26) whose cylinder forms part of the cutting assembly.

6. Apparatus according to Claim 5, characterised in that the expansion assembly comprises a plate (56) of which all the rods (58) are fastened in the axial direction by bearings.

7. Apparatus according to any one of Claims 1 to 6, characterised in that each end part of a spindle (52) is divided into two fingers each carrying a cutting tip.

8. Apparatus according to any one of Claims 1 to 6, characterised in that each end part of a spindle is divided by slots into a plurality of fingers each carrying a toothed cutting sector (84).

9. Method of separating a nuclear fuel assembly end piece, the end piece (14) to be separated having an adaptor plate pierced with passages receiving guide tubes fixed to the plate and to another end piece, characterised in that :

a frame is temporarily fixed on the end piece (14) to be separated, in alignment with said end piece,

— the spindles (52) of a set of spindles are moved simultaneously relative to the frame in a direction bringing about the insertion of the spindles into the guide tubes to a depth such that an end part of the spindles, which is expansible and provided with cutting members, will face the place of separation,

— all the rods are simultaneously driven rotationally,

— and the progressive extension of the end parts is effected by simultaneous insertion of rods (58) into all the spindles.

# FIG.1.

FIG.2.

FIG.3.

**FIG.4.**

# FIG.5.

# FIG.7.

# FIG.6.

FIG.8.

84

58

52

FIG.9.

84

58

52

84